Europäisches Patentamt

European Patent Office

Office européen des brevets

(11) Publication number: **0 264 433 B1**

# EUROPEAN PATENT SPECIFICATION

(45) Date of publication of patent specification: **13.04.94**    (51) Int. Cl.5: **G06F 7/02**, G06E 3/00

(21) Application number: **87903172.2**

(22) Date of filing: **29.04.87**

(86) International application number:
**PCT/US87/00952**

(87) International publication number:
**WO 87/06735 (05.11.87 87/24)**

(54) **METHOD AND APPARATUS FOR OPTICAL RF PHASE EQUALIZATION.**

(30) Priority: **30.04.86 US 857277**

(43) Date of publication of application:
**27.04.88 Bulletin 88/17**

(45) Publication of the grant of the patent:
**13.04.94 Bulletin 94/15**

(84) Designated Contracting States:
**BE DE FR GB IT NL SE**

(56) References cited:
US-A- 3 796 495       US-A- 4 066 333
US-A- 4 328 576       US-A- 4 390 247
US-A- 4 445 141       US-A- 4 448 494
US-A- 4 460 250       US-A- 4 503 388
US-A- 4 522 466       US-A- 4 633 170
US-A- 4 636 718

APPLIED PHYSICS LETTERS, vol. 12, no. 5,
1st March 1968, pages 181-183, New York,
US; M.J. BRIENZA: "Variable time compres-
sion, expansion, and reversal of RF signals
by laser-acoustic techniques"

(73) Proprietor: **GRUMMAN AEROSPACE CORPO-
RATION
South Oyster Bay Road
Bethpage, NY 11714(US)**

(72) Inventor: **BRANDSTETTER, Robert, W.
229 Loring Road
Levittown, NY 11756(US)**
Inventor: **DOUCETTE, Adrian, R.
146 Washington Avenue
Garden City, NY 11530(US)**

(74) Representative: **Hirsch, Marc-Roger
Cabinet Hirsch
34 rue de Bassano
F-75008 Paris (FR)**

## Description

### FIELD OF THE INVENTION

The present invention relates to phase equalization circuits, and more particularly to an optical circuit suited for RF signals.

### BACKGROUND OF THE INVENTION

RF signals propagating through a medium generally experience non-linear phase characteristics, namely, phase varies nonlinearly with frequency. Without special processing, such a propagated signal will be detected as a degraded signal.

The prior art has made wide use of tapped delay lines (both digital and analog) which introduce different delays to different frequency components of an RF signal, the components being added at an output of the delay lines so that phase shifts of a propagated signal may be compensated, enabling the compensated signal to resemble the signal before propagation. As a result, information content of an original input signal may be preserved.

Although such prior art devices have been satisfactorily employed for years, they are severely restricted in the number of frequencies that can be handled by the digital electronics circuitry and the speed with which the equalization is activated.

Optical filter systems and delay lines are also known in the prior art. US Patent 4,390,247 describes a continuously variable delay line, in which a signal to be delayed is converted into acoustic waves in an acousto-optical cell, and modulated on a coherent light beam. The modulated light beam is combined with undiffracted coherent light, and the recombined light is focused by a Fourier transform lens onto a photomixer which detects the delayed signal. The delay time is equal to the time required for the acoustic waves to propagate through the acousto-optical cell to the point of incidence of the coherent light on the cell. By deflecting the point of incidence of the coherent light on the acousto-optic cell, the delay time varies continuously.

US Patent 4,522,466 describes a recursive optical filter system, comprising a source which produces a substantially coherent collimated beam of optical radiation, means for producing an optical Fourier transform, an optical filter which filters out unwanted frequencies, means for producing an optical inverse Fourier transform, and recursive means for directing the beam in a manner to traverse the optical filtering means a plurality of times. The beam of coherent light is modulated with RF signal, and the frequencies of the modulated beam are filtered out a plurality of times by the optical filter. The filtered modulated beam is then combined with a local oscillator and changed into a filtered RF signal.

### BRIEF DESCRIPTION OF THE PRESENT INVENTION

The present invention is carried out by an apparatus and method according to claim 1 and claim 7, respectively. Embodiments of the invention are defined in the dependent claims.

The invention utilizes coherent optical processing to perform phase equalization corrections of RF signals by providing equalization paths for a multitude of discrete frequencies in a parallel operation. By virtue of the present invention, thousands of discrete frequencies may be handled. As will be discussed hereinafter, the invention permits fixed or variable phase control for each of the frequencies which would not be possible by the prior art circuits.

After acousto-optical processing of a propagated distorted signal, a phase control array is introduced in the Fourier plane of the optical signal. The array is comprised of individual components that have their birefringence electrically altered and which correspondingly alters the phase of the particular frequency associated with the element. The corrected optical signal then undergoes photoelectric transformation at a photomixer and the result is a phase-equalized correction signal which corresponds to an input signal prior to its propagation-induced phase distortion.

### BRIEF DESCRIPTION OF THE FIGURES

The above-mentioned objects and advantages of the present invention will be more clearly understood when considered in conjunction with the accompanying drawings, in which:

FIG. 1 is a diagrammatic top plan view of an electro-optic apparatus for achieving the inventive concept;

FIG. 2 is a partial diagrammatic view of a phase control array as employed in the present invention.

### DETAILED DESCRIPTION OF THE PRESENT INVENTION

A laser beam 10 serves as an optical carrier signal for a modulating RF signal 14 which has been previously distorted as a result of propagation. The beam 10 and RF signal 14 are introduced to a conventional acousto-optical modulator 12, such as the type manufactured by the Isomet Corporation; and a modulated acoustic field (object) 16 is formed by modulator 12.

A Fourier plane 22 is developed between Fourier lens 18 and inverse Fourier lens 20. By introducing a phase control array 23 at the Fourier plane 22, the phase equalization capability of the present invention may be realized. Specifically, there is a spatial frequency distribution of object 16 on the Fourier plane 22; and by placing a multi-optical element phase control array 23 in coplanar relationship with the spatial distribution, each frequency component of object 16, as spatially distributed, may undergo phase modification so that a phase-equalized optical signal results. Thus, as will be presently explained, the elements of the array produce desired phase control at each frequency component of the object 16.

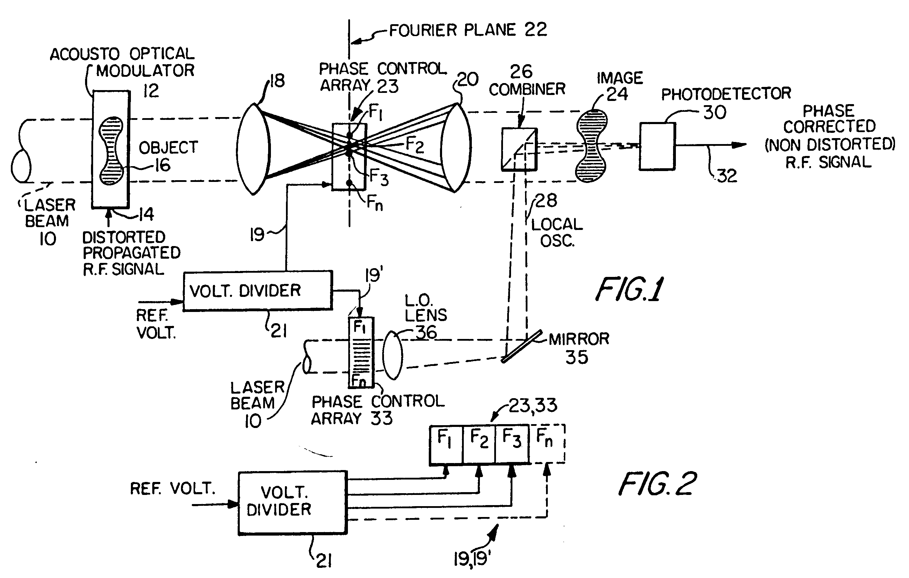

To better understand the phase control array 23, reference is made to FIG. 2 wherein a multi-element electro-optic device is illustrated. The individual elements are schematically indicated by corresponding spatially distributed frequency components $F_1$-$F_n$. For purposes of simplicity, only a small number of frequency components is illustrated. However, it should be understood that the present invention is intended for a large number of frequency components, typically one thousand or more. Appropriate electro-optic devices include PLZT, liquid crystal, Kerr cells, Pockel cells, Faraday cells, and the like. The purpose of each element in the array is to vary the optical path length of the spatially distributed frequency components, at the Fourier plane 22, so that the birefringence of each element is varied as required to alter the optical path length of each element in a manner that will equalize the phase of each frequency component as it passes through the Fourier plane 22. As a result, the phase of an image located to the right of the inverse Fourier lens 20 is phase equalized relative to the distorted object 16.

The equalized image undergoes processing by combiner 26 which may be a conventional semi-silvered mirror. A laser local oscillator beam 28 forms a second optical input to the combiner 26 to achieve optical heterodyning or down converting thus forming the phase-equalized image 24 which impinges upon an intensity-sensitive square law photodetector 30 for transforming the corrected phase-equalized image 24 to a corrected RF signal at photodetector output 32. As a result, the RF signal at output 32 is a phase-corrected non-distorted signal resembling the original electrical signal which became distorted by propagation prior to introduction to the equalization circuitry of FIG. 1.

It should be pointed out that the phase shift occurring at each of the elements in array 23 can be continuously varied, as in the Kerr, Pockel cell and liquid crystal devices, or discretely varied as in a Faraday cell. The amount of phase shift occurring through each cell is controlled by a device which, in its basic form, may resemble a voltage divider 21 to which a reference voltage is applied. Individual outputs from the voltage divider, as generally indicated by reference numeral 19 (FIG. 2), drive each element of the array to a degree corresponding to the desired phase shift to be achieved by each element of the array 23.

The laser local oscillator beam 28, which forms the second optical input to the combiner 26 is derived from the laser beam 10. The local oscillator beam may be phase-controlled in a manner similar to that disclosed in connection with the signal path through the phase-control array 23. This is done by including a second phase-control array 33 similar in construction to the multi-optical element phase-control array 23. As in the case of the first array 23, the second phase-control array 33 modifies the phase of the laser beam 10 as it impinges upon each element of the array. The lens 36 focusses the phase-modified beam for reflection by mirror 35 to form the local oscillator beam 28. In fact, this beam will be comprised of phase-modified sections which correspond to the phase modifications to the object 16, as a result of phase-control array 23.

The inclusion of a phase-modified local oscillator beam is not mandatory. However, the utilization of both arrays 23 and 33 can be advantageously operated in parallel and/or tandem to achieve phase correction of a distorted propagated RF signal over a wide range of applications.

In accordance with the present invention, phase correction may be accomplished in three modes:

1. utilization of phase-control array 23 and a local oscillator beam 28 which does not undergo phase control through array 33;

2. phase control of the local oscillator beam 28 by utilization of array 33 and no utilization of a phase-control array 23 at the Fourier plane 22; and

3. utilization of phase-control arrays 23 and 33.

The degree of elemental local oscillator phase control is determined by the voltage divider output 19' in the same manner previously described in connection with voltage divider output 19, which drives the phase-control array 23.

Although the present invention illustrates a single pass device, if additional phase correction is required, multiple passes through the phase control arrays 23 and 33 may be accomplished by a recursive technique which may typically utilize mirrors (not shown) for achieving multiple passes.

The modification of the optical path length through each array element, corresponding to phase shift through that element, may be expressed by the equation:

$$\Delta\phi = 2\,(\,t\,n_c C)/\lambda$$

where

t is the differential delay;

$n_c$ is equal to the refractive index of the element cell;

C is equal to the speed of light; and

λ is the wavelength of the laser beam 10.

Although the present invention has been described for radio frequencies, it is equally applicable to phase equalizing frequency components of other multi-frequency signals, regardless of the medium through which they propagate and encounter distortion.

In situations where amplitude equalization of signal frequency components is also necessary, this may be achieved by modifying the frequency components of the signal at the Fourier plane; additional amplitude equalization being possible by modifying the local oscillator beam. The means for so modifying the amplitude of individual frequency components is by utilizing arrays of light filtering elements, as disclosed in our co-pending PCT application entitled METHOD AND APPARATUS FOR OPTICAL RF AMPLITUDE FILTERING, n° WO 8706734.

**Claims**

1. A circuit for performing phase equalisation on frequency components of an electrical signal (14), comprising:
   - means (12) for modulating a coherent light beam (10) with a multifrequency electrical input signal (14) to form an image (16);
   - means for forming a Fourier plane (22) and spatially distributing the frequency components ($F_1$-$F_n$) of the image (16) on the plane (22);
   - means (23) located in the Fourier plane for transforming the frequency components ($F_1$-$F_n$) of the image (16) in the plane (22);
   - optical means (26) for combining the transformed image and a local oscillator light beam (28) for down converting the transformed image;
   - means (30) for changing the down converted transformed image to an electrical signal (32);
   characterised in that the means (23) located in the Fourier plane for transforming the frequency components ($F_1$-$F_n$) of the image (16) in the plane (22) comprises an array (23) of spaced birefringent elements for selectively varying the optical path length of each spatially distributed frequency component ($F_1$-$F_n$), thereby shifting the phase of each distributed frequen-

cy component ($F_1$-$F_n$) to form a transformed image, and

in that said circuit further comprises a second array (33) of birefringent elements on the path of the local oscillator light beam (28), for selectively varying the optical path of respective sections of the local oscillator light beam as the beam impinges upon the elements, thereby achieving phase control of the local oscillator beam sections.

2. A circuit according to claim 1, characterised in that the array (23) of spaced birefringent elements comprises:
   - adjacent birefringent elements respectively located at the frequency component points; and
   - means for selectively controlling birefringence of each element.

3. A circuit according to claim 1 or 2, characterised in that the second array (33) of spaced birefringent elements comprises:
   - adjacent birefringent elements respectively located at the frequency component points; and
   - means for selectively controlling birefringence of each element.

4. A circuit according to any one of claims 1 to 3, characterised in that the modulating means comprise an acousto-optical modulator (12) having:
   - an optical input communicating with a source of coherent light; and
   - an electrical input terminal connected to the input signal.

5. A circuit according to any one of claims 1 to 4, characterised in that the means for forming a Fourier plane (22) and spatially distributing the frequency components ($F_1$-$F_n$) of the image (16) on the plane (22) comprise:
   - a Fourier lens (18) positioned forwardly of the plane (22); and
   - an inverse Fourier lens (20) positioned rearwardly of the plane (22).

6. A circuit according to any one of claims 1 to 5, characterised in that the means for changing the down converted transformed image to an electrical signal (32) comprises a photodetector (30).

7. A method for performing phase equalisation on frequency components of an electrical signal (14), the method comprising the steps of:

- modulating a coherent light beam (10) with a multifrequency electrical input signal (14) to form an image (16);
- forming a Fourier plane (22) and spatially distributing the frequency components ($F_1$-$F_n$) of the image (16) in the plane (22);
- transforming the frequency components ($F_1$-$F_n$) of the image (16) in the plane (22);
- combining the transformed image and a local oscillator light beam (28) for down converting the transformed image;
- changing the down converted transformed image to an electrical signal (32);

characterised in that the step of transforming the frequency components ($F_1$-$F_n$) of the image (16) in the plane (22) consists in selectively varying the optical path length at points in the plane (22), thereby shifting the phase of each distributed frequency component ($F_1$-$F_n$), and

in that said method further comprises the step of selectively varying the optical path of respective sections of the local oscillator light beam (28),thereby achieving phase control of the local oscillator beam sections.

8. The method according to claim 7, characterised in that the step of selectively varying the optical path length at points in the plane (22) consists in selectively changing the birefringence at points on the plane.

9. The method according to claim 7 or 8, characterised in that the step of selectively varying the optical path length of respective sections of the local oscillator light beam (28) consists in selectively changing the birefringence on the path of the respective sections of the local oscillator light beam (28).

**Patentansprüche**

1. Ein Schaltkreis zum Ausführen eines Phasen-Ausgleiches an Frequenz-Komponenten eines elektrischen Signals (14), mit
Einrichtungen (12) zur Modulation eines kohärenten Lichtstrahles (10) mit einem viele Frequenzen enthaltenden elektrischen Eingangssignal (14) zur Herstellung eines Bildes (16)
Einrichtungen, um eine Fourier-Ebene (22) zu bilden und die Frequenz-Komponenten ($F_1$-$F_n$) des Bildes (16) auf der Ebene (22) räumlich zu verteilen,
Einrichtungen (23), die sich in der Fourier-Ebene befinden, um die Frequenz-Komponenten ($F_1$-$F_n$) des Bildes (16) in der Ebene (22) zu transformieren,
optische Einrichtungen (26) zur Vereinigung des transformierten Bildes und des Lichtstrahles (28) eines eingebauten Oszillators, um das transformierte Bild abwärtszumischen,
Einrichtungen (30) zur Umsetzung des abwärtsgemischten transformierten Bildes in ein elektrisches Signal (32),
dadurch **gekennzeichnet,**
daß die sich in der Fourier-Ebene befindenden Einrichtungen (23) zur Transformation der Fourier-Komponenten ($F_1$-$F_n$) des Bildes (16) in der Ebene (22) eine Anordnung (23) voneinander beabstandeter doppelbrechender Elemente zur selektiven Variation der optischen Weglänge jeder räumlich verteilten Frequenz-Komponente ($F_1$-$F_n$) aufweist, wodurch die Phase jeder verteilten Frequenz-Komponente ($F_1$-$F_n$) zur Bildung eines transformierten Bildes verschoben wird, und daß der Schaltkreis weiterhin eine zweite Anordnung (33) mit doppelbrechenden Elementen in der Bahn des Lichtstrahles (28) des eingebauten Oszillators aufweist, um den optischen Weg jeweiliger Abschnitte des Lichtstrahles des eingebauten Oszillators selektiv zu variieren, wenn der Strahl auf die Elemente fällt, wodurch die Phasen-Steuerung der Abschnitte des Strahles des eingebauten Oszillators erreicht wird.

2. Schaltkreis gemäß Anspruch 1,
dadurch **gekennzeichnet,**
daß die Anordnung (23) der voneinander getrennten doppelbrechenden Elementen nebeneinander liegende doppelbrechende Elemente, die sich jeweils an den Punkten der Frequenz-Komponenten befinden, und
Einrichtungen zur selektiven Steuerung der Doppelbrechung jedes Elementes aufweist.

3. Schaltkreis gemäß Anspruch 1 oder 2,
dadurch **gekennzeichnet,**
daß die zweite Anordnung (33) von voneinander beabstandeten doppelbrechenden Elementen nebeneinander liegende doppelbrechende Elemente, die sich jeweils an den Punkten der Frequenz-Komponenten befinden, und außerdem Einrichtungen zur selektiven Steuerung der Doppelbrechung jedes Elementes aufweist.

4. Schaltkreis gemäß einem der Ansprüche 1 bis 3,
dadurch **gekennzeichnet,**
daß die Modulations-Einrichtungen einen akusto-optischen Modulatur (12) aufweisen, der einen optischen Eingang, der mit einer kohärenten Lichtquelle verbunden ist, und einen elektrischen Eingangsanschluß, der mit dem Eingangssignal verbunden ist, aufweist.

5. Schaltkreis gemäß einem der Ansprüche 1 bis 4,
   dadurch **gekennzeichnet,**
   daß die Einrichtungen zur Bildung einer Fourier-Ebene (22) und zur räumlichen Verteilung der Frequenz-Komponenten ($F_1$-$F_n$) des Bildes (16) auf der Ebene (22) eine Fourier-Linse (18), die vor der Ebene (22) angeordnet ist, und
   eine inverse Fourier-Linse (20), die hinter der Ebene (22) angeordnet ist, aufweisen.

6. Schaltkreis gemäß einem der Ansprüche 1 bis 5,
   dadurch **gekennzeichnet,**
   daß die Einrichtungen zur Umsetzung des abwärtsgemischten transformierten Bildes in ein elektrisches Signal (32) einen Fotodetektor (30) aufweisen.

7. Verfahren zur Ausführung eines Phasen-Ausgleiches an Frequenz-Komponenten eines elektrischen Signals (14), wobei das Verfahren die folgenden Schritte aufweist: Modulation eine kohärenten Lichtstrahles (10) mit einem viele Frequenzen enthaltenden elektrischen Eingangsignals (14) zur Herstellung eines Abbildes (16),
   Bildung einer Fourier-Ebene (22) und räumliche Verteilung der Frequenz-Komponenten ($F_1$-$F_n$) des Bildes (16) in der Ebene (22),
   Transformation der Frequenz-Komponenten ($F_1$-$F_n$) des Bildes (16) in der Ebene (22),
   Vereinigung des transformierten Bildes und des Lichtstrahles eines eingebauten Oszillators zum Abwärtsmischen des transformierten Bildes,
   Umsetzung des abwärtsgemischten transformierten Bildes in ein elektrisches Signal (32),
   dadurch **gekennzeichnet,**
   daß der Schritt der Transformation der Frequenz-Komponenten ($F_1$-$F_n$) des Bildes (16) in der Ebene (22) in der selektiven Variation der optischen Weglänge an Punkten der Ebene (22) besteht, wodurch die Phase jeder verteilten Frequenz-Komponente ($F_1$-$F_n$) verschoben wird, und daß das Verfahren weiterhin den Schritt einer selektiven Variation des optischen Weges von jeweiligen Abschnitten des Lichtstrahles (28) des eingebauten Oszillators aufweist, wodurch eine Phasen-Steuerung der Abschnitte des Strahles des eingebauten Oszillators erreicht wird.

8. Verfahren gemäß Anspruch 7,
   dadurch **gekennzeichnet,**

daß der Schritt der selektiven Variation der optischen Weglänge an Punkten der Ebene (22) in einer selektiven Änderung der Doppelbrechung an Punkten der Ebene besteht.

9. Verfahren gemäß Anspruch 7 oder 8,
   dadurch **gekennzeichnet,**
   daß der Schritt der selektiven Variation der optischen Weglänge jeweiliger Abschnitte des Lichtstrahles (28) des eingebauten Oszillators in einer selektiven Änderung der Doppelbrechung auf der Bahn der jeweiligen Abschnitte des Lichtstrahles (28) des eingebauten Oszillators besteht.

**Revendications**

1. Un circuit permettant de réaliser une égalisation de phase sur les composants fréquentiel d'un signal électrique (14) comprenant:
   - des moyens (12) pour moduler un faisceau lumineux cohérent (10) sur un signal électrique d'entrée multifréquence (14) pour former une image (16);
   - des moyens pour former un plan de Fourier (22) et pour distribuer spatialement les composants fréquentiel ($F_1$ à $F_n$) de l'image (16) sur le plan (22);
   - des moyens (23) situés dans le plan de Fourier pour transformer les composants fréquentiels ($F_1$-$F_n$) de l'image (16) dans le plan (22);
   - des moyens optiques (26) pour combiner l'image transformée avec un faisceau lumineux (28) venant d'un oscillateur local pour convertir l'image transformée à une fréquence plus basse;
   - des moyens (30) pour transformer l'image transformée convertie à une fréquence plus basse en un signal électrique (32);
   caractérisé en ce que les moyens (23) situés dans le plan de Fourier pour transformer les composants fréquentiels ($F_1$ à $F_n$) de l'image (16) dans le plan (22) comportent une matrice (23) d'élements biréfringents espacés pour faire varier sélectivement la longueur du chemin optique de chaque composant fréquentiel distribué spatialement ($F_1$ à $F_n$), réalisant ainsi un décalage de phase sur chaque composant fréquentiel distribué ($F_1$ à $F_n$) pour former une image transformée et en ce que ledit circuit comporte en outre une deuxième matrice (33) d'éléments biréfringents disposés sur le chemin du faisceau lumineux venant de l'oscillateur local (28) pour faire varier sélectivement le chemin optique des parties respectives du faisceau lumineux venant de l'oscillateur local lorsque le faisceau vient frapper les éléments de manière à réaliser la commande de phase des parties du faisceau venant de l'oscillateur local.

2. Un circuit selon la revendication 1, caractérisé en ce que la matrice (23) d'éléments biréfringents espacés comprend:
   - des éléments biréfringents adjacents situés respectivement aux points des composants fréquentiels; et
   - des moyens pour commander sélectivement la biréfringence de chaque élément.

3. Un circuit selon la revendication 1 ou 2, caractérisé en ce que la deuxième matrice (33) d'éléments biréfringents espacés comprend:
   - des éléments biréfringents adjacents situés respectivement aux points des composants fréquentiels; et
   - des moyens pour commander sélectivement la biréfringence de chaque élément.

4. Un circuit selon l'une quelconque des revendications 1 à 3, caractérisé en ce que les moyens de modulations comprennent un modulateur acousto-optique (12) présentant:
   - une entrée optique communiquant avec une source de lumière cohérente;
   - une borne d'entrée électrique reliée au signal d'entrée.

5. Un circuit selon l'une quelconque des revendications 1 à 4, caractérisé en ce que les moyens pour former un plan de Fourier (22) et distribuer spatialement les composants fréquentiels ($F_1$ à $F_n$) de l'image (16) sur le plan (22) comprennent:
   - une lentille de Fourier (18) située en avant du plan (22); et
   - une lentille inverse de Fourier (22) située à l'arrière du plan (22).

6. Un circuit selon l'une quelconque des revendications 1 à 5, caractérisé en ce que les moyens de transformation de l'image convertie à une fréquence plus basse en un signal électrique (32) comprennent un photodétecteur (30).

7. Un procédé pour réaliser l'égalisation de phase sur les composants fréquentiels d'un signal électrique (14), ledit procédé comprenant les étapes consistant à:
   - moduler un faisceau de lumière cohérente (10) au moyen d'un signal d'entrée électrique multifréquence (14) pour réaliser une image (16);
   - former un plan de Fourier (22) et distribuer spatialement les composants fréquentiels ($F_1$ à $F_n$) de l'image (16) dans le plan (22);
   - transformer les composants fréquentiels ($F_1$ à $F_n$) de l'image (16) dans le plan (22);
   - combiner l'image transformée avec un faisceau lumineux (28) venant d'un oscillateur local pour convertir l'image transformée à une fréquence plus basse;
   - transformer l'image convertie à une fréquence plus basse en un signal électrique (32);

   caractérisé en ce que l'étape de transformation des composants fréquentiels ($F_1$ à $F_n$) de l'image (16) dans le plan (22) consiste à faire varier sélectivement la longueur du trajet optique en des points dans le plan (22), de manière à décaler ainsi la phase de chaque composant fréquentiel distribué ($F_1$ à $F_n$), et en ce que ledit procédé comprend en outre l'étape consistant à faire varier sélectivement le chemin optique de parties respectives du faisceau lumineux (28) venant de l'oscillateur local, de manière à réaliser la commande de phase des parties du faisceau venant de l'oscillateur local.

8. Le procédé selon la revendication 7, caractérisé en ce que l'étape consistant à faire varier sélectivement la longueur du trajet optique en des points dans le plan (22) consiste à changer sélectivement la biréfringence en des points sur le plan.

9. Le procédé selon la revendication 7 ou 8, caractérisé en ce que l'étape consistant à faire varier sélectivement la longueur du chemin optique des parties respectives du faisceau lumineux (28) venant de l'oscillateur local consiste à changer sélectivement la biréfringence sur le trajet des parties respectives du faisceau lumineux (28) venant de l'oscillateur local.

FIG.1

FIG.2

EP 0 264 433 B1